**Europäisches Patentamt**

**European Patent Office**

**Office européen des brevets**

(11) Veröffentlichungsnummer: **0 271 009 B1**

(12) **EUROPÄISCHE PATENTSCHRIFT**

(45) Veröffentlichungstag der Patentschrift:
12.09.90

(51) Int. Cl.⁵: **B65G 1/04**

(21) Anmeldenummer: **87117938.8**

(22) Anmeldetag: **04.12.87**

(54) Lagersystem mit Hochregallager und Fördereinrichtungen.

(30) Priorität: **05.12.86 DE 3641671**

(43) Veröffentlichungstag der Anmeldung:
**15.06.88 Patentblatt 88/24**

(45) Bekanntmachung des Hinweises auf die Patenterteilung:
**12.09.90 Patentblatt 90/37**

(84) Benannte Vertragsstaaten:
**CH DE FR IT LI LU SE**

(56) Entgegenhaltungen:
AT-B- 262 893
DE-A- 1 556 641
DE-A- 2 935 968
DE-B- 2 255 346
DE-U- 8 320 799

PATENT ABSTRACTS OF JAPAN, Band 10,
Nr. 301 (M-525)[2357], 14. Oktober 1986; JP - A
- 61 114 907 (FUJITSU LTD.)02.06.1986

(73) Patentinhaber: **GEROH GmbH, Mechanische Systeme, Fischergasse 182, D-8551 Waischenfeld(DE)**

(72) Erfinder: **Stemmer, Gerhard, Dr.-Ing., Hans-Popp-Strasse 38, D-8542 Roth bei Nürnberg(DE)**

(74) Vertreter: **Lorenzen, Knud, Dipl.-Chem. Dr., Morassistrasse 8, D-8000 München 5(DE)**

**Beschreibung**

Die Erfindung betrifft den Gegenstand der Patentansprüche. Es sind bereits Lagersysteme bekannt die ein Hochregallager und in diesem Hochregallager verfahrbare Fördereinrichtungen zum Beschicken mit und zur Entnahme von Gütern umfassen.

Solche Regallager können unterschiedlich bedient werden. Die einfachste Möglichkeit besteht darin, daß konventionelle Regalstapler eingesetzt werden, die frei verfahrbar sind. Die mögliche obere Aufgriff- und Absetzhöhe beträgt etwa 6 m. Bei den sogenannten hohen Regallagern, bei denen die obere Aufgriff- und Absetzhöhe maximal etwa 12–13 m beträgt, wird ein sogenannter Hochregalstapler eingesetzt. Diese weisen jedoch den Nachteil auf, daß sie nicht in wirtschaftlicher Weise automatisierbar sind, eine geringe Umschlagsleistung aufweisen und ein hohes Gewicht des Regalbediengerätes bedingen, weiterhin, daß an die Maßgenauigkeit des Hallenbodens des Regallagers hohe Ansprüche gestellt werden. Weiterhin sind sogenannte Hochregallager bekannt, deren maximale Aufgriff- und Absetzhöhe etwa 40 m beträgt, und die mittels sogenannter Regalförderzeuge, RFZ, bedient werden. Solche Regalförderzeuge sind jedoch häufig an die Gassen bzw. Straßen des Hochregallagers gebunden. Ein Regalförderzeug in Form eines Stapelkrans mit Kabinensteuerung für ein solches Hochregallager ist in der DE OS 1 556 641 beschrieben. Nachteilig solcher Regalförderzeuge für Hochregallager ist jedoch, daß unter Umständen sehr lange Ausschwingzeiten des Regalförderzeuges bei großen Bauhöhen gegeben sind. Aus der AT B 262 893 ist eine Verschiebebühne für Regalstapler und/oder Regalbedienungsgeräte mehrstöckiger Regalanlagen bekannt, wobei die dort beschriebene Vertikal-Transportvorrichtung ein Teilstück einer Laufschiene trägt, das senkrecht verschiebbar ist und an die Laufschienen in den einzelnen Etagen des Regallagers herangefahren werden kann. Diese vorbekannte Vertikal-Transportvorrichtung ist aber insgesamt auf Schienen waagerecht verschiebbar angeordnet, so daß ein entsprechend breiter Bereich der gesamten Breite des Regallagers für die Verschiebebühne der Vertikal-Transporteinrichtung freigehalten werden muß und hierdurch die einzelnen Ebenen eines Hochregallagers nicht feuersicher voneinander oder feuersicher von dem Aufzugsbereich abgetrennt werden können. Aus der DE B 2 255 346 ist eine Anlage zum selbsttätigen Umschlagen von Containern zwischen Transportfahrzeugen und einem Lagerhaus bekannt, bei welcher die einzelnen Etagen des Lagerhauses mit einem Aufzug bedient werden. Bei dieser vorbekannten Anlage werden Container jedoch auf jedem Gang hintereinander angeordnet, so daß dieses Lagersystem nur dann vorteilhaft ist, wenn gleiche Artikel in jedem Gang gelagert werden, da bei Lagerung unterschiedlicher Artikel und Herausnahme eines bestimmten dieser unterschiedlichen Artikel Umsetzvorgänge erforderlich werden. Bei diesem System ist weiterhin keine seitliche Lagerung oder Stapelung von Artikeln von der die einzelnen Gänge bedien den Fördereinrichtung möglich, so daß nur ein sog. sequentieller Zugriff, nicht jedoch ein paralleler oder gleichzeitiger Zugriff möglich ist. Aus der DE A 2 935 986 sind Förderwagen mit Fahrwerk und darauf befestigbaren Beihälter bekannt, wobei hier Energie- und Datenleitungen vorgesehen sind, über die spezielle Einsatzmöglichkeit in einem speziellen Lagersystem eines solchen vorbekannten Förderwagens ist hier jedoch nichts ausgesagt.

Aufgabe der vorliegenden Erfindung ist die Verbesserung eines Lagersystems gemäss der AT B 262 893, wobei dieses Hochregallager nach verschiedenen Konstruktionsweisen aufgebaut sein kann, z.B. durch einfache Regale, welche in vorhandene Hallen eingestellt werden oder sogenannte Silo-Regalhäuser, das in einfacher Weise auch automatisiert werden kann, d.h. bei welchem die Steuerung der verfahrbaren Fördereinrichtungen zum Beschicken mit Gütern und zur Entnahme von Gütern aus dem Hochregallager einfach durchgeführt werden kann, und bei dem auch mehrere solcher verfahrbaren Fördereinrichtungen gleichzeitig in einem Hochregallager eingesetzt werden können, und bei dem ein höherer Brandschutz dadurch gegeben ist, daß die einzelnen Ebenen des Hochregallagers feuersicher voneinander und auch von dem Aufzugsbereich abgetrennt sind, so daß ein eventueller Einbau von Feuerschutzeinrichtungen wie Sprinkleranlagen leichter möglich ist, Ein Vorteil ist, daß die einzelnen Güter auf der jeweiligen Etage oder Ebene des Hochregallagers bis zu ihrer Förderung zum Aufzugsbereich verbleiben, daß ein ununterbrochener Transport ohne Umladen erforderlich ist und daß in einfacher Weise ein Anschluß von Nebenhochregallagern oder eine Erweiterung der Hochregallager möglich ist.

Ein weiterer Vorteil des erfindungsgemäßen Lagersystems liegt darin, daß die einzelnen Etagen oder Ebenen des Hochregallagers als Folge des verbesserten Brandschutzes für unterschiedliche Güter nutzbar sind. Ein weiterer Vorteil ist, daß zu gleicher Zeit in mehreren Etagen bei Einsatz mehrerer Beschickungs- und Entnahmeeinrichtungen eine Beschickung oder Entnahme von Gütern ohne gegenseitige Störung der Beschickungs- und Entnahmeeinrichtungen möglich ist.

Das Lagersystem gemäß der Erfindung zur Lösung dieser Aufgabe ist dadurch gekennzeichnet, daß

a) die Aufzugseinrichtung ein in einem Aufzugsschacht angeordneter Aufzug ist,
b) die Förderschienen um die einzelnen Regalblöcke in Schleifen geführt sind, wobei geeignete Weichen zur Richtungssteuerung vorgesehen sind, und
c) die Förderschienen und das Teilstück Energie- und Datenleitungen aufweisen.

Gemäß einer vorteilhaften Ausführungsform ist das erfindungsgemäße Lagersystem mit einer Beschickungs- und Entnahmeeinrichtung ausgerüstet, die mit einer Steuerkabine koppelbar ist. Diese Steuerkabine ist von den einzelnen Beschickungs-

und Entnahmeeinrichtungen abkoppelbar, so daß es möglich ist, mit einer Steuerkabine mehrere Beschickungs- und Entnahmeeinrichtungen zu betreiben.

Gemäß einer weiteren bevorzugten Ausführungsform weist die Beschickungs- und Entnahmeeinrichtung einen Lastträger auf, der mittels eines Spindelantriebs senkrecht verschiebbar ist. Hierdurch ist es möglich, in exakt reproduzierbarer Weise bestimmte Höhen innerhalb einer Etage des Regallagers anzufahren, weiterhin ist der Vorteil gegeben, daß durch den Spindelantrieb keine Fangvorrichtung im Fall eines Versagens der Einrichtung für die senkrechte Verschiebung erforderlich ist.

Gemäß einer weiteren bevorzugten Ausführungsform ist auch die gegebenenfalls vorhandene Steuerkabine mittels Spindelantrieb senkrecht verschiebbar, hierdurch sind ebenfalls die Vorteile einer exakten Höheneinstellung der Steuerkabine und die Vermeidung von Fangvorrichtungen bei Versagen des Antriebes für die senkrechte Verschiebung möglich.

Gemäß einer weiteren bevorzugten Ausführungsform sind die Beschickungs- und Entnahmeeinrichtungen sowie gegebenenfalls die Steuerkabine, welche an den waagerechten Förderschienen bzw. in dem Aufzug an den oberhalb hiervon befindlichen waagerechten Förderschienen bzw. dem Förderschienenstück hängend angeordnet sind, im unteren Bereich durch Seitenführungsrollen geführt, welche mit entsprechenden Seitenführungsschienen im Aufzug und im Hochregallager zusammenwirken. Hierdurch ist es möglich, jegliche Schwingungen oder Verwindungen der Beschickungs- und Entnahmeeinrichtungen bzw. der Steuerkabine zu vermeiden, so daß eine noch exaktere und maßgenauere Führung und damit auch Steuerung und Automatisierung der Beschickungseinrichtung möglich ist.

Bei dem erfindungsgemäßen Lagersystem ist der Aufzugsschacht mit dem darin befindlichen Aufzug fest angeordnet, d. h. die Aufzugseinrichtung ist nicht in horizontaler Richtung verfahrbar sondern feststehend. Hierdurch ist es möglich, eine einwandfreie Abschottung des Aufzugsschachtes und damit des Aufzuges von dem eigentlichen Lagerbereich zu erreichen, weiterhin ist es auf diese Weise möglich, die einzelnen Etagen eines Hochregallagers sicher gegen Feuer voneinander abzuschotten. Weiterhin wird durch den feststehenden Aufzug in dem Aufzugsschacht ein sogenanntes Ausschwingen oder Nachschwingen der Aufzugseinrichtung vermieden, wie dies beispielsweise bei den sogenannten Regalförderzeugen der Fall sein kann bzw. nur durch aufwendige Maßnahmen vermieden werden kann. Außerdem ist durch den feststehenden und nicht verfahrbaren Aufzug in dem Aufzugsschacht im Gegensatz zu einer verfahrbaren Aufzugsvorrichtung der Vorteil gegeben, daß kein zusätzlicher Raum für einen solchen Verfahrbereich erforderlich ist oder bereitgestellt werden muß.

Die einzelnen Förderschienen in dem Hochregallager können durch an sich bekannte Weichen und Kurvenstücke in geeigneter Weise untereinander verbunden sein, so daß ein Befahren der einzelnen Gänge einer Lageretage von jeder beliebigen Seite und Richtung möglich ist.

Die Erfindung wird unter Bezugnahme auf die Zeichnung näher erläutert; in der Zeichnung stellen dar:

Fig. 1 eine perspektivische Ansicht eines Lagersystems;
Fig. 2 eine Aufsicht von vorne auf die Beschickungs- und Entnahmeeinrichtung mit angekoppelter Steuerkabine,
Fig. 3 eine Aufsicht von der Seite auf die in Fig. 2 dargestellte Beschickungs- und Entnahmeeinrichtung;
Fig. 4 eine perspektivische Ansicht in eine Etage eines Lagersystems mit Förderschienen, Weichen und Kurvenstücken der Förderschienen sowie Beschikkungs- und Entnahmeeinrichtungen.

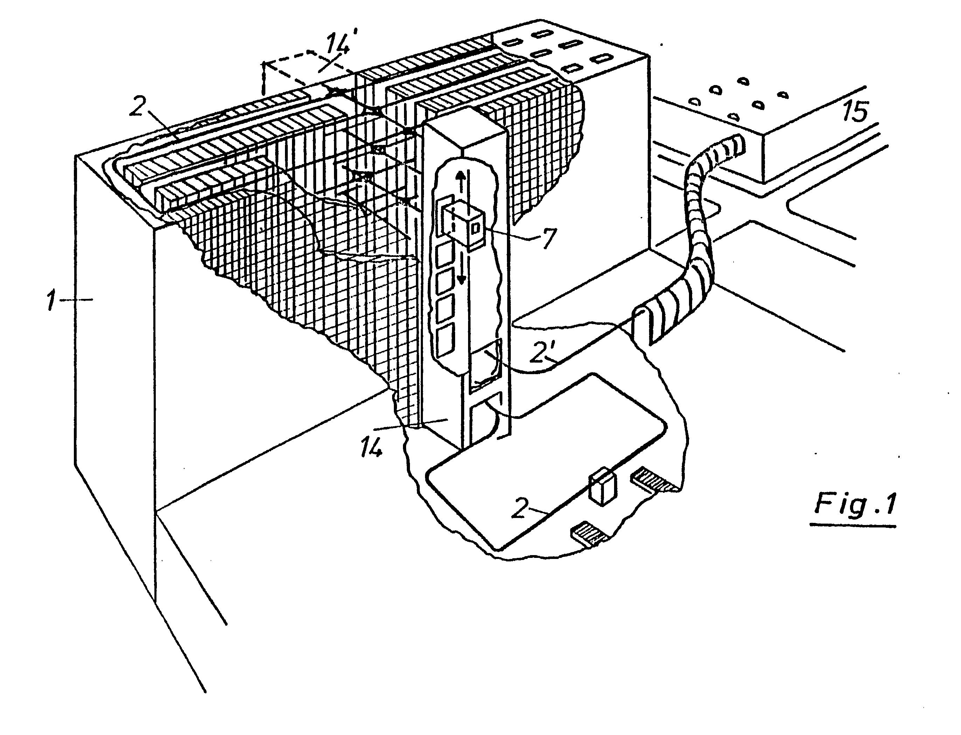

In der Fig. 1 ist ein Hochregallager 1 in perspektivischer, teilweise aufgeschnittener Ansicht dargestellt, an welches zwei Aufzugsschächte 14, 14' angebaut sind. Diese Aufzugsschächte 14, 14' können jedoch auch einen integralen Bestandteil des Gebäudes des Hochregallagers bilden.

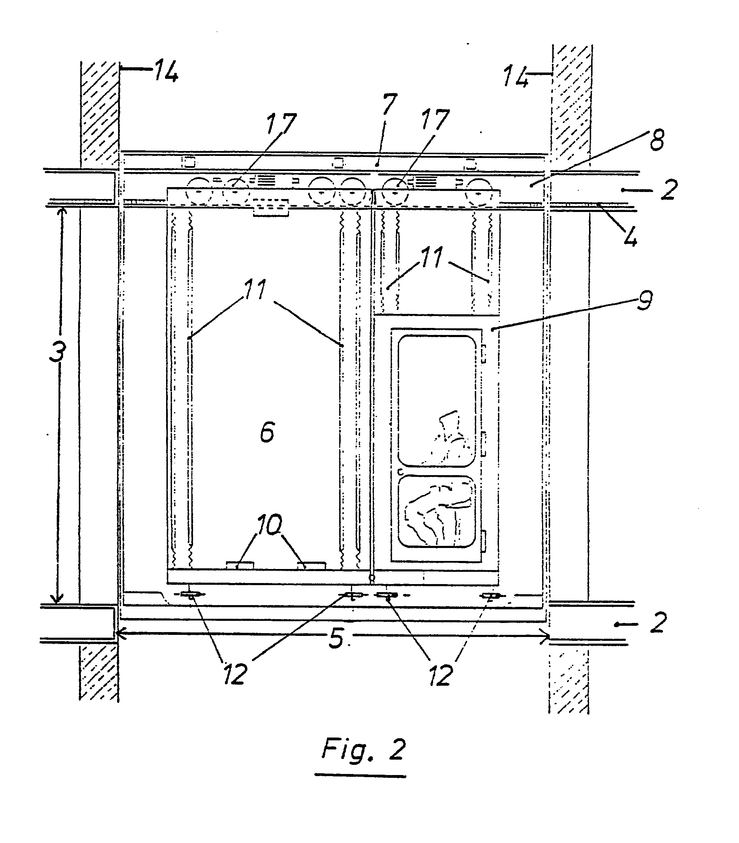

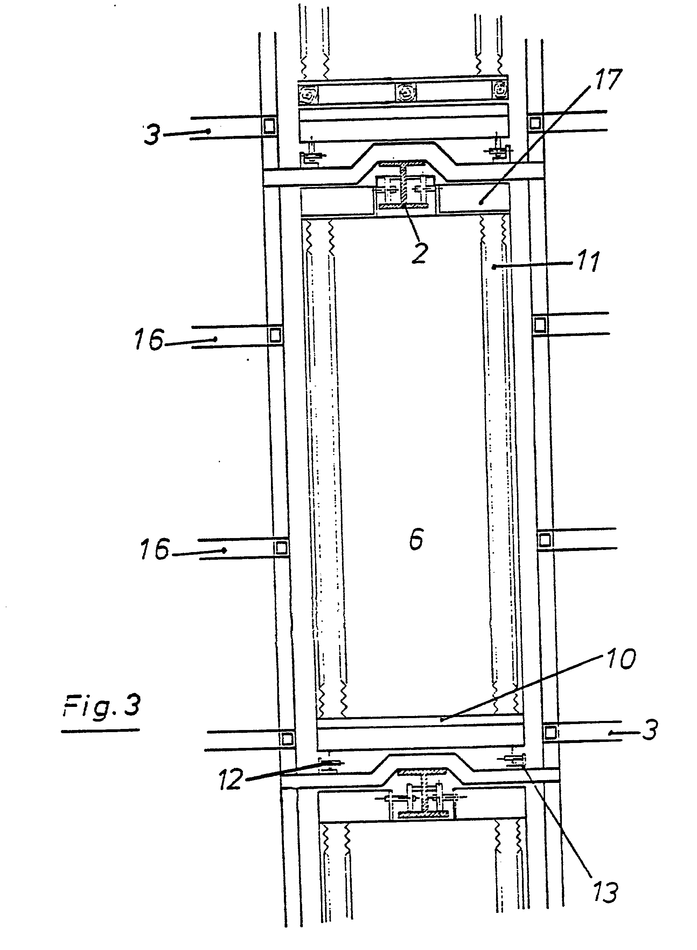

In dem Aufzugsschacht 14 ist feststehend, d. h. nicht in horizontaler Richtung verfahrbar, ein Aufzug bzw. eine Aufzugseinrichtung 7 enthalten, welche eine Beschickungs- und Entnahmeeinrichtung 6, mit der die einzelnen Etagen 3 des Hochregallagers 1 angefahren werden können, trägt. Im Erdgeschoß des Aufzugsschachtes 14 sind weiterhin noch in geeigneter Weise Förderschienen 2 angeordnet, auf denen die Beschickungs- und Entnahmeeinrichtung verfahren werden kann, um die Güter beispielsweise von einem Lastwagen aufzunehmen oder hierauf aufzuladen. Weiterhin dargestellt ist noch eine Förderschiene 2', welche von dem Aufzugsschacht 14 zu einem Nachbargebäude 15 führt. Ein solches Nachbargebäude 15 kann beispielsweise eine Erweiterung des Hochregallagers darstellen. In den Etagen befinden sich waagerechte Förderschienen 2. In der Fig. 2 ist eine Aufsicht von vorne auf die Beschickungs- und Entnahmeeinrichtung 6 sowie eine hiermit gekoppelte Steuerkabine 9 sowie die angrenzenden Teile des Hochregallagers 1 mit den Förderschienen 2 dargestellt. Diese Förderschienen 2 enden im Bereich des Aufzugsschachtes 14, wobei das in dem Aufzug 7 vorgesehene Teilstück 8 der Förderschienen mit den Enden der Förderschienen 2 in der Lücke 5 fluchtend ausgerichtet ist, sobald sich der Aufzug in geeigneter Positon in einer der Etagen befindet. Sowohl die Förderschienen 2 als auch das Teilstück 8 der Förderschiene im Aufzug weisen an sich bekannte Energie- und Datenleitungen 4 auf, die zum Betrieb und zur Steuerung der Beschick ungs- und Entnahmeeinrichtung 6 nötig sind. Die Beschickungs- und Entnahmeeinrichtung 6 hängt an dem Teilstück 8 der Förderschiene, ebenso die in der Fig.2 dargestellte Steuerkabine 9. Hierbei sind die Beschickungs- und Entnahmeeinrichtung 6 sowie die Steuerkabine 9 miteinander mechanisch,energiemäßig und datenmäßig koppelbar. Die Beschickungs- und Entnahmeeinrichtung 6 und die Steuerkabine 9 weisen an sich bekannte Fahrwerke auf, üblicherweise Elektromotoren, welche bei alleinigem Einsatz einer Beschickungs- und Entnahmeeinrichtung 6 automatisch gesteuert werden, oder im Falle einer angekoppelten Steuerkabine 9 vom Bedienungspersonal gesteuert werden können. Der Aufzug 7 weist einen an sich bekannten, nicht näher dargestellten Aufzugsmechanismus auf. Die Höhe der Einzeletagen kann bei einem erfindungsgemäßen Lagersystem bis zu 12 m betragen. Ferner weist die Beschickungs- und Entnahmeeinrichtung 6 noch geeignete Lastträger 10 auf, die nicht näher erläutert sind. Hierbei kann es sich beispielsweise um ausfahrbare Arme einer Teleskopgabel handeln, mit denen beispielsweise Paletten von der Beschickungs- und Entnahmeeinrichtung 6 in die - nicht dargestellten - Einzelregale des Hochregallagers 1 überführt oder hieraus entnommen werden können. Da die Einzeletagen - we zuvor ausgeführt - ene Höhe bis zu 12 m aufweisen können und häufig Güter mit geringeren Höhenabmessungen gelagert werden sollen, können sich auf jeder Einzeletage des Hochregallagers 1 mehrere Stapelebenen 16 befinden, wie dies in Fig. 3 dargestellt ist. Zu diesem Zweck muß der Lastträger 10 innerhalb der Beschickungs- und Entnahmeeinrichtung 6 höhenverstellbar sein. Gemäß der bevorzugten Ausführungsform erfolgt dies mittels eines Spindelantriebs 11, wodurch einersets eine exakte Höhenpositionierung der Lastträger möglich ist und andererseits technisch aufwendige Auffangvorrichtungen für den Fall eines Versagens der Höhenverstellung innerhalb der Beschickungs- und Entnahmeeinrichtung 6 vermieden werden können.

Die Fig. 3 zeigt eine seitliche Schnittansicht der Beschickungs- und Entnahmeeinrichtung 6, die mittels der Fahrwerke 17 auf den Förderschienen 2 bzw. dem Teilstück 8 der Förderschiene, das sich im Aufzug 7 befindet, verfahren werden kann. Falls die Etagen eine große Höhe, z.B. 12 m, aufweisen, ist es vorteilhaft, wenn die Beschickungs- und Entnahmeeinrichtung 6 sowie die Steuerkabine 9 im unteren Teil Seitenführungsrollen 12 besitzen, die durch Seitenführungsschienen 13 geführt werden, so daß ein seitliches Schwingen von Beschickungs- und Entnahmeeinrichtung 6 bzw. Steuerkabine 9 vermieden werden kann.

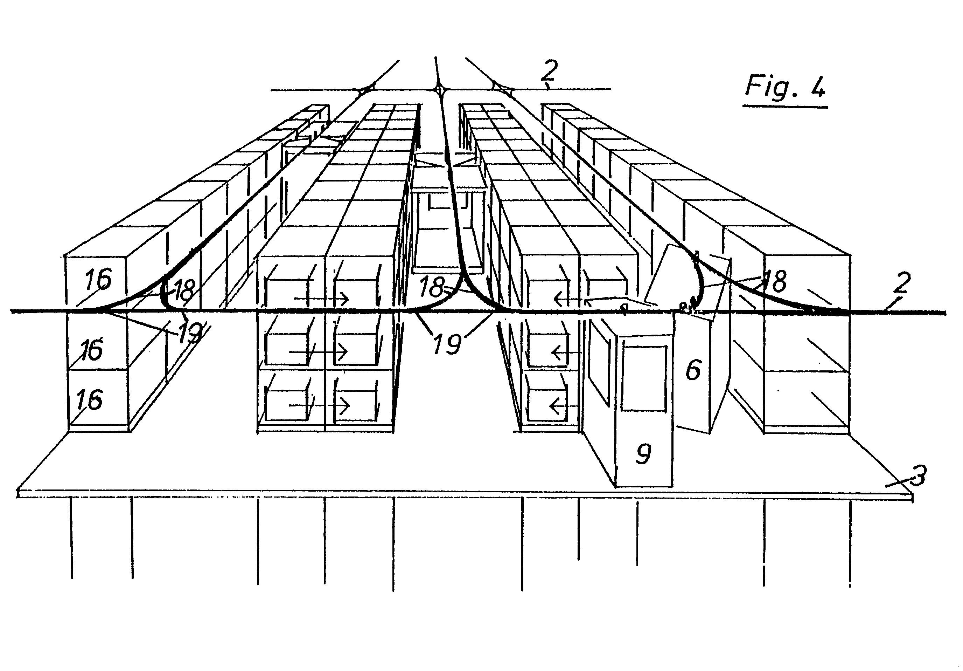

Die Fig. 4 zeigt eine Lagerebene bzw. -etage eines erfindungsgemäßen Lagersystems in perspektivischer Ansicht, in welchem zwischen den einzelnen Lagerregalen Förderschienen 2 angeordnet sind, an denen Beschickungs- und Entnahmeeinrichtungen 6 sowie Steuerkabinen 9 angeordnet sind. Die Förderschienen 2 umfassen Kurvenstücke 18 sowie Weichen 19, so daß eine Beschickung oder Entnahme von jeder Seite oder Richtung möglich ist und auch gleichzeitig mehrere Beschickungs- und Entnahmeeinrichtungen 6 und Steuerkabinen 9 auf einer Lagerebene bzw. -etage des Hochregallagers in Betrieb sein können.

Durch die Kombination der Einzelbestandteile des erfindungsgemäßen Lagersystems ist ein vorteilhafter Betrieb eines solchen ein Hochregallager umfassenden Lagersystems möglich. Bei dem erfindungsgemäßen Lagersystem können auch mehrere Beschickungs- und Entnahmeeinrichtungen 6 vorgesehen sein, ebenso mehrere Steuerkabinen. Auf diese Weise ist es möglich, das Hochregallager sehr wirtschaftlich zu betreiben, da bei Einsatz von mehreren Beschickungs- und Entnahmeeinrichtungen bzw. Steuerkabinen ein gleichzeitiger Betrieb auf mehreren Ebenen des Hochregallagers möglich ist oder auch auf der Verbindung zu einem Nachbarlager, z.B. im Fall von Umschichtungen von Gütern innerhalb einer Etage in einem Hochregallager, während durch den Einsatz von weiteren Beschickungs- und Entnahmeeinrichtungen eine ungestörte Benutzung von anderen Etagen des Hochiegallagers möglich ist. Da die Beschickungs- und Eintnahmeeinrichtung wesentlich weniger aufwendig und kostspielig ist als ein Regalförderzeug, stellt dies einen großen wirtschaftlichen Vorteil dar.

Wie bereits zuvor beschrieben, ist es bei dem erfindungsgemäßen Lagersystem möglich, durch einen automatisierten und ferngesteuerten Betrieb der Beschickungsund Entnahmeeinrichtung sowie des Lastträgers 10 das Lagersystem mit geringem Personaleinsatz zu betreiben.

In den einzelnen Etagen des Hochregallagers die Förderschienen 2 um einzelne Regalblöcke in Schleifen geführt, wobei geeignete Weichen zur Richtungssteuerung vorgesehen sind. Daher, können auf ein und derselben Etage auch mehrere Beschickungs- und Entnahmeeinrichtungen auf verschiedenen Bahnen gleichzeitig eingesetzt werden.

**Patentansprüche**

1. Lagersystem, umfassend ein Hochregallager (1) und in diesem Hochregallager verfahrbare Fördereinrichtungen zum Beschicken mit und zur Entnahme von Gütern, wobei in jeder Etage (3) des Hochregallagers einzelne Regalblöcke und waagerechte Förderschienen (2) mit wenigstens einer hierauf hängenden und verfahrbaren Beschickungs- und Entnahmeeinrichtung (6) vorhanden sind, sowie eine Aufzugseinrichtung (7,14,14') für die senkrechte Förderung der auf einem Teilstück der durch die Aufzugseinrichtung bewegten Förderschiene befindlichen Beschickungs- und Entnahmeeinrichtung/en; zu und von den Förderschienen, wobei das in der Aufzugseinrichtung befindliche Teilstück der Förderschiene in eine entsprechende Lücke oder an das Endstück der Förderschiene in den Etagen des Hochregallagers paßt, dadurch gekennzeichnet, daß

a) die Aufzugseinrichtung ein in einem Aufzugsschacht (14,14') angeordneter Aufzug (7) ist,

b) die Förderschienen (2) um die einzelnen Regalblöcke in Schleifen geführt sind, wobei geeignete Weichen (19) zur Richtungssteuerung vorgesehen sind, und

c) die Förderschienen (2) und das Teilstück (8) Energie- und Datenleitungen (4) aufweisen.

2. Lagersystem nach Anspruch 1, dadurch gekennzeichnet, daß die Beschickungs- und Entnahmeeinrichtung/en (6) mit einer Steuerkabine (9) koppelbar ist/sind.

3. Lagersystem nach Anspruch 1 oder 2, dadurch gekennzeichnet, daß die Beschickungs- und Entnahmeeinrichtung/en (6) jeweils einen Lastträger (10) aufweist/aufweisen, der mittels Spindelantrieb (11) senkrecht verschiebbar ist.

4. Lagersystem nach Anspruch 2 oder 3, dadurch gekennzeichnet, daß die Steuerkabine/n mittels Spindelantrieb (11) senkrecht verschiebbar ist/sind.

5. Lagersystem nach einem der vorhergehenden Ansprüche, dadurch gekennzeichnet, daß die Beschickungs- und Entnahmeeinrichtung/en (6) und gegebenenfalls die Steuerkabine/n (9) untere Seitenführungsrollen (12) besitzen, die mit entsprechenden Seitenführungsschienen (13) im Aufzug (7) und im Hochregallager (1) zusammenwirken.

## Revendications

1. Système de stockage, comprenant un magasin (1) à casiers à étages et des dispositifs de transport déplaçables dans ce magasin pour l'introduction et l'extraction de marchandises, des blocs de casiers individuels et des rails de transport horizontaux (2) avec au moins un dispositif d'introduction et d'extraction (6) suspendu et déplaçable sur lesdits rails étant prévus à chaque étage (3) du magasin, ainsi qu'un dispositif élévateur (7, 14, 14') pour le transport vertical du (des) dispositif(s) d'introduction et d'extraction se trouvant sur un tronçon (8) du rail de transport déplacé par le dispositif élévateur, vers et à partir des rails de transport, le tronçon du rail de transport se trouvant dans le dispositif élévateur s'ajustant dans une discontinuité correspondante ou à l'extrémité du rail de transport dans les étages du magasin, caractérisé par le fait que

a) le dispositif élévateur est un élévateur (7) disposé dans une cage d'élévateur (14, 14')

b) les rails de transport (2) passent en boucles autour des différents blocs de casiers, des aiguillages appropriés (19) étant prévus pour la commande de direction et

c) les rails de transport (2) et le tronçon (8) présentent des lignes d'énergie et d'informations (4).

2. Système de stockage suivant la revendication 1, caractérisé par le fait que le(s) dispositif(s) d'introduction et d'extraction (6) est (sont) coupable(s) avec une cabine de commande (9).

3. Système de stockage suivant la revendication 1 ou 2 caractérisé par le fait que le(s) dispositif(s) d'introduction et d'extraction (6) présente(nt) chaque fois un portecharge (10) déplaçable verticalement au moyen d'une commande à vis (11).

4. Système de stockage suivant la revendication 2 ou 3 caractérisé par le fait que la (les) cabine(s) de commande est (sont) déplaçable(s) verticalement au moyen, d'une commande à vis (11).

5. Système de stockage suivant l'une des revendications précédentes, caractérisé par le fait que le(s) dispositif(s) d'introduction et d'extraction (6) et le cas échéant la (les) cabine(s) (9) présentent des galets de guidage latéraux (12) qui coopèrent avec des rails de guidage latéraux (13) correspondants dans l'élévateur (7) et dans le magasin à casiers à étages (1).

## Claims

1. Storing system comprising high storage shelvings (1) and conveying means which are adapted to be moved into said high storage shelvings for loading with and removal of goods, in which in each level (3) of the high storage shelvings individual shelf blocks and horizontal conveying rails (2) having at least one movable loading and removing means (6) suspended on said rails (2) are present, and an elevator means (7, 14, 14') for the vertical conveying of the loading and removal means disposed on a section (8) of the rail moved by the elevator means to and from the conveying rails, the section of the conveying rail disposed in the elevator means fitting into a corresponding gap or onto the end piece of the conveying rail in the levels of the high storage shelvings, characterized in that

a) the elevator means is an elevator (7) arranged in an elevator shaft (14, 14'),

b) the conveying rails (2) are led round the individual shelf blocks in loops, suitable switchpoints (19) being provided for direction control and c) the conveying rails (2) and the section (8) have power and data lines (4).

2. Storing system according to claim 1, characterized in that the loading and removal means (6) is/are couplable to a control cabin (9).

3. Storing system according to claim 1 or 2, characterized in that the loading and removal means (6) comprises/ comprise in each case a load beam (10) which is vertically displaceable by means of a spindle drive (11).

4. Storing system according to claim 2 or 3, characterized in that the control cabin(s) is/are vertically displaceable by means of a spindle drive (11).

5. Storing system according to any one of the preceding claims, characterized in that the loading and removal means (6) and possibly the control cabin(s) (9) have lower lateral guide rollers (12) which cooperate with corresponding lateral guide rails (13) in the elevator ( 7) and in the high storage shelvings (1).

*Fig.1*

14'

2

7

2'

14

2

15

EP 0 271 009 B1

Fig. 2

Fig. 3

Fig. 4